# EUROPÄISCHE PATENTSCHRIFT

(11) **EP 2 646 636 B1**
(45) Veröffentlichungstag und Bekanntmachung des Hinweises auf die Patenterteilung: **28.12.2016**
(21) Anmeldenummer: 11790758.4
(22) Anmeldetag: 24.11.2011
(51) Int. Cl.: B66B 13/14, H02P 9/00, H02K 11/00, G01D 5/20, H02K 11/225, G01B 7/30

(54) **VORRICHTUNG ZUR POSITIONSERMITTLUNG**
APPARATUS FOR POSITION ASCERTAINMENT
DISPOSITIF DE DÉTERMINATION DE POSITION

(30) Priorität: 02.12.2010 DE 102010062316
(43) Veröffentlichungstag der Anmeldung: 09.10.2013
(73) Patentinhaber: Siemens Aktiengesellschaft, 80333 München (DE)
(72) Erfinder: GUTZMER, Marcus, 30827 Garbsen (DE); NOLTE, Uwe, 30890 Barsinghausen (DE); SONNTAG, Guido, 30989 Gehrden (DE)
(86) Internationale Anmeldenummer: PCT/EP2011/070972
(87) Internationale Veröffentlichungsnummer: WO 2012/072498

(56) Entgegenhaltungen:
- EP-A2- 0 658 745
- DE-A1-102005 047 178
- US-A1- 2009 265 992
- US-A1- 2010 115 853
- US-A1- 2010 242 368

## Beschreibung

Die Erfindung betrifft eine Vorrichtung zur Positionsermittlung gemäß dem Oberbegriff des Anspruchs 1 und ein Verfahren zur Positionsermittlung gemäß dem Oberbegriff des Anspruchs 7.

Aus dem Stand der Technik ist, wie in der US 2010/0045222 A1 beschrieben, ein magnetflussregulierter bürstenloser Permanentmagnetmotor bekannt. Der Motor hat einen Stator mit einer Innenbohrung. Ein Permanentmagnetrotor ist in der Innenbohrung angeordnet. Eine Steuerungserregerwicklung wird von einem Gleichstrom durchströmt, um den magnetischen Fluss zu regulieren. Ein niedriger Wechselstrom durchfließt ebenfalls die Steuerungserregerwicklung und ein daraus resultierendes Signal wird ermittelt, um eine Position des Permanentmagnetrotors zu ermitteln.

US 2010/0242368 A1 offenbart einen Türantrieb mit einem Motor zur Bewegung der Tür, einem Stromsensor zur Erzeugung eines Stromsignals, das zu einem Motorstrom korrespondiert, eines Positionssensors zur Erzeugung eines Positionssignals, das zu einer Position der Tür korrespondiert, und einer Steuereinheit zur Steuerung des Motorstroms in Abhängigkeit von dem Stromsignal und dem Positionssignal. Bei einem manuellen Öffnen der Tür wirkt der Motor als Generator zur Erzeugung elektrischer Energie.

Der Erfindung liegt die Aufgabe zugrunde, eine Vorrichtung zur Positionsermittlung anzugeben.

Die Aufgabe wird erfindungsgemäß durch eine Vorrichtung zur Positionsermittlung mit den Merkmalen des Anspruchs 1 und ein Verfahren zur Positionsermittlung mit den Merkmalen des Anspruchs 7 gelöst.

Vorteilhafte Ausgestaltungen der Erfindung sind Gegenstand der Unteransprüche.

Bei einer erfindungsgemäßen Vorrichtung zur Positionsermittlung eines mit einer elektrischen Maschine gekoppelten beweglichen Bauteils dient die elektrische Maschine bei einem manuellen Bewegen des Bauteils als ein Generator zur Erzeugung von elektrischer Energie für eine Positionsermittlungsanordnung, wobei die Kopplung der elektrischen Maschine mit dem Bauteil derart ausgebildet ist, dass eine magnetische Anziehungsreaktion und/oder Abstoßungsreaktion zwischen magnetischen und/oder magnetisierten Teilen eines Rotors und eines Stators der elektrischen Maschine zu einer durch die Kopplung ungehinderten kurzzeitigen Beschleunigung des Rotors und einer daraus resultierenden kurzzeitigen Steigerung der erzeugten elektrischen Energie führt.

Die Vorrichtung ist beispielsweise zur Positionsermittlung eines beweglichen Bauteils verwendbar, welches als Tür eines Aufzugs, insbesondere als Kabinentür einer Aufzugkabine ausgebildet ist.

Die magnetische Anziehungsreaktion resultiert aus einer Annäherung eines magnetischen Nordpols des Rotors an einen magnetischen Südpol des Stators und/oder aus einer Annäherung eines magnetischen Südpols des Rotors an einen magnetischen Nordpol des Stators während Drehbewegungen des Rotors. Aufgrund der Anziehungsreaktion wirkt auf den Rotor kurzzeitig ein höheres Drehmoment als durch eine äußere Kraft aufgrund der manuellen Bewegung des beweglichen Teils verursacht, wodurch eine Beschleunigung des Rotors bis zur vollständigen Annäherung der jeweiligen gegensätzlichen magnetischen Pole und dadurch eine Steigerung der erzeugten elektrischen Energie erfolgt. Die magnetische Abstoßungsreaktion und die daraus resultierende Beschleunigung des Rotors, welche zu einer Steigerung der durch die elektrische Maschine erzeugten elektrischen Energie führt, resultiert aus einer Abstoßung des magnetischen Nordpols des Rotors vom magnetischen Nordpol des Stators und/oder des magnetischen Südpols des Rotors vom magnetischen Südpol des Stators nach einem Vorbeibewegen am magnetischen Nordpol bzw. Südpol des Stators und eine daraus resultierende kurzzeitige Steigerung des auf den Rotor wirkenden Drehmomentes.

Auf diese Weise ist auch bei einer sehr langsamen manuellen Bewegung des Bauteils zumindest kurzzeitig ausreichend elektrische Energie für die Positionsermittlungsanordnung erzeugbar, wodurch eine exakte Positionsermittlung des beweglichen Bauteils jederzeit sichergestellt ist. Dies ist bei der Kabinentür der Aufzugkabine beispielsweise bei einem Ausfall einer regulären elektrischen Energieversorgung über ein Energieversorgungsnetz und einem dadurch erforderlichen manuellen Öffnen der Kabinentür zur Personenbefreiung aus der Aufzugkabine von großer Bedeutung.

Mittels der Vorrichtung ist auch bei einem derartigen Ausfall der regulären elektrischen Energieversorgung das Öffnen der Kabinentür und die Position der geöffneten Kabinentür erfassbar und speicherbar, so dass bei wiederhergestellter regulärer elektrischer Energieversorgung die Kabinentür sofort wieder mit Normalgeschwindigkeit zu schließen und auch wieder zu öffnen ist. Eine aus dem Stand der Technik bekannte sehr zeitaufwändige vorherige Initialisierungsbewegung der Kabinentür, beispielsweise ein vollständiges Öffnen und/oder Schließen der Kabinentür mit einer sehr langsamen Bewegungsgeschwindigkeit, um eine vollständig geöffnete und vollständig geschlossene Position der Kabinentür erneut zu ermitteln und auf diese Weise wieder die Positionsbestimmung zu ermöglichen, ist nicht erforderlich, wodurch eine erhebliche Zeitersparnis erreicht ist. D.h. der Aufzug ist bei wiederhergestellter regulärer elektrischer Energieversorgung wesentlich schneller wieder einsatzbereit.

Durch eine Zählung der kurzzeitigen Steigerungen der von der elektrischen Maschine erzeugten elektrischen Energie als eine Art Inkrementezählung ist auch gleichzeitig die Positionsermittlung des beweglichen Bauteils möglich, da die Anzahl der Steigerungen der erzeugten elektrischen Energie mit einer Anzahl von Umdrehungen des Rotors der elektrischen Maschine und dadurch mit der Bewegung des Bauteils, welches mit der elektrischen Maschine über eine Rotorachse gekoppelt ist, korrespondiert. Ein zusätzlicher Inkrementalgeber ist dann nicht erforderlich, wodurch auch keine zusätzliche elektrische Energie zu dessen Betrieb erforderlich ist. Daher ist die mittels der Vorrichtung erzeugte elektrische Energie zur Positionsermittlung und zur Speicherung der ermittelten Position ausreichend. Des Weiteren ist dadurch eine Kostenersparnis und Bauraumreduzierung erreichbar. Zudem ist die Positionsermittlung, da sie nicht mechanisch erfolgt, weitgehend verschleißfrei.

Zweckmäßigerweise dient die elektrische Maschine bei einer ausreichenden elektrischen Energieversorgung als ein Antriebsmotor zum Bewegen des Bauteils, d.h. beispielsweise im Falle der Kabinentür dient die elektrische Maschine bei einer intakten regulären elektrischen Energieversorgung als Antriebsmotor zum Öffnen und Schließen der Kabinentür der Aufzugkabine. Nur bei einem Ausfall der regulären elektrischen Energieversorgung dient die elektrische Maschine bei einem manuellen Bewegen des Bauteils als Generator, um auf diese Weise die ausreichende elektrische Energieversorgung für die Positionsermittlungsanordnung sicherzustellen. Auf diese Weise ist kein zusätzlicher Generator für diese Funktion erforderlich, sondern die ohnehin erforderliche elektrische Maschine ist als Generator nutzbar. Alternativ ist jedoch auch ein zusätzlicher Antriebsmotor für das bewegliche Bauteil möglich.

Vorzugsweise weist der Stator und/oder der Rotor zumindest einen Permanentmagnet auf. Die Wirkung der kurzzeitigen Beschleunigung des Rotors aufgrund der magnetischen Anziehungsreaktion und/oder Abstoßungsreaktion zwischen magnetischen und/oder magnetisierten Teilen des Rotors und des Stators der elektrischen Maschine ist grundsätzlich auch möglich, wenn sowohl der Rotor als auch der Stator als Elektromagnete ausgebildet sind, da hierfür bereits eine magnetische Remanenz von Eisenkernen der Elektromagnete ausreichend sein kann. Die Wirkung ist jedoch verbessert und auch bei einer längeren Zeitspanne seit einem letzten Betrieb noch sichergestellt, wenn der Stator und/oder der Rotor zumindest einen Permanentmagnet aufweisen. Daher ist in einer vorteilhaften Ausführungsform der Stator als ein Permanentmagnetstator ausgebildet und am Rotor ist zumindest ein Permanentmagnet senkrecht zu einer Rotorachse angeordnet. In einer weiteren vorteilhaften Ausführungsform ist der Rotor als ein Permanentmagnetrotor ausgebildet und am Stator ist zumindest ein Permanentmagnet angeordnet.

Zweckmäßigerweise umfasst die Vorrichtung zumindest eine Speichereinheit zur Speicherung der ermittelten Position des Bauteils. Diese ist zur Speicherung mittels der durch die elektrische Maschine im Generatorbetrieb erzeugten elektrischen Energie betreibbar, sollte jedoch vorteilhafterweise auch ohne eine elektrische Energieversorgung speichererhaltend sein. Beispielsweise ist die Speichereinheit als ein so genannter EEPROM, insbesondere als ein so genannter Flash-EEPROM oder als eine Festplatte ausgebildet.

Vorteilhafterweise umfasst die Positionsermittlungsanordnung einen Inkrementalgeber, beispielsweise einen optischen Inkrementalgeber. Dieser ist zum Beispiel in einem Normalbetrieb zur Positionsermittlung einsetzbar, d.h. im Falle der Kabinentür der Aufzugkabine bei intakter regulärer elektrischer Energieversorgung. Ein derartiger Inkrementalgeber ist bei Ausfall der regulären elektrischen Energieversorgung und dem manuellen Bewegen des Bauteils auch durch die elektrische Energieversorgung der elektrischen Maschine im Generatorbetrieb mit elektrischer Energie versorgbar und dadurch weiterhin zur Positionsermittlung betreibbar. Jedoch ist es in einem solchen Fall auch, wie bereits beschrieben, möglich, die Position des beweglichen Bauteils über die Anzahl der Steigerungen der von der elektrischen Maschine erzeugten elektrischen Energie zu bestimmen, welche mit der Anzahl der Umdrehungen des Rotors korrespondieren, der über die Rotorachse mit dem beweglichen Bauteil gekoppelt ist.

In einem erfindungsgemäßen Verfahren zur Positionsermittlung eines mit einer elektrischen Maschine gekoppelten beweglichen Bauteils unter Verwendung der Vorrichtung wird bei einem manuellen Bewegen des Bauteils mittels der als Generator arbeitenden elektrischen Maschine elektrische Energie für eine Positionsermittlungsanordnung erzeugt und mittels der Positionsermittlungsanordnung eine Position des Bauteils ermittelt, wobei ein Rotor der elektrischen Maschine durch eine magnetische Anziehungsreaktion und/oder Abstoßungsreaktion zwischen magnetischen und/oder magnetisierten Teilen des Rotors und eines Stators der elektrischen Maschine von der Kopplung ungehindert kurzzeitig beschleunigt wird und dadurch die Erzeugung der elektrischen Energie kurzzeitig gesteigert wird.

Das Verfahren kann beispielsweise zur Positionsermittlung eines beweglichen Bauteils verwendet werden, welches als Tür eines Aufzugs, insbesondere als Kabinentür einer Aufzugkabine ausgebildet ist.

Die magnetische Anziehungsreaktion resultiert aus einer Annäherung eines magnetischen Nordpols des Rotors an einen magnetischen Südpol des Stators und/oder aus einer Annäherung eines magnetischen Südpols des Rotors an einen magnetischen Nordpol des Stators während Drehbewegungen des Rotors. Aufgrund der Anziehungsreaktion wirkt zusätzlich zu einem aufgrund einer äußeren Kraft durch das manuelle Bewegen des Bauteils auf den Rotor einwirkenden Drehmoment ein zusätzliches Drehmoment auf den Rotor, wodurch der Rotor bis zur vollständigen Annäherung der jeweiligen gegensätzlichen magnetischen Pole beschleunigt wird. Dadurch wird von der elektrischen Maschine eine höhere elektrische Energie erzeugt. Die magnetische Abstoßungsreaktion und das dadurch auf den Rotor wirkende zusätzliche Drehmoment, welches zur kurzzeitigen Beschleunigung des Rotors führt, resultiert aus einer Abstoßung des magnetischen Nordpols des Rotors vom magnetischen Nordpol des Stators und/oder des magnetischen Südpols des Rotors vom magnetischen Südpol des Stators nach einem Vorbeibewegen am magnetischen Nordpol bzw. Südpol des Stators, wodurch ebenfalls eine höhere elektrische Energie von der elektrischen Maschine erzeugt wird.

Auf diese Weise wird auch bei einer sehr langsamen manuellen Bewegung des Bauteils zumindest kurzzeitig ausreichend elektrische Energie für die Positionsermittlungsanordnung erzeugt und dadurch eine exakte Positionsermittlung des beweglichen Bauteils jederzeit sichergestellt. Dies ist bei der Kabinentür der Aufzugkabine beispielsweise bei einem Ausfall einer regulären elektrischen Energieversorgung über ein Energieversorgungsnetz und einem dadurch erforderlichen manuellen Öffnen der Kabinentür zur Personenbefreiung aus der Aufzugkabine von großer Bedeutung.

Mittels des Verfahrens wird auch bei einem derartigen Ausfall der regulären elektrischen Energieversorgung das Öffnen der Kabinentür und die Position der geöffneten Kabinentür erfasst und gespeichert, so dass bei wiederhergestellter regulärer elektrischer Energieversorgung die Kabinentür sofort wieder mit Normalgeschwindigkeit zu schließen und auch wieder zu öffnen ist. Eine aus dem Stand der Technik bekannte sehr zeitaufwändige vorherige Initialisierungsbewegung der Kabinentür, beispielsweise ein vollständiges Öffnen und/oder Schließen der Kabinentür mit einer sehr langsamen Bewegungsgeschwindigkeit, um eine vollständig geöffnete und vollständig geschlossene Position der Kabinentür erneut zu ermitteln und auf diese Weise wieder die Positionsbestimmung zu ermöglichen, ist nicht erforderlich, wodurch eine erhebliche Zeitersparnis erreicht ist. D.h. der Aufzug ist bei wiederhergestellter regulärer elektrischer Energieversorgung wesentlich schneller wieder einsatzbereit.

Vorzugsweise wird die Position des Bauteils durch eine Ermittlung einer Anzahl der kurzzeitigen Steigerungen der erzeugten elektrischen Energie und/oder durch einen Inkrementalgeber der Positionsermittlungsanordnung ermittelt. Die Positionsermittlung des beweglichen Bauteils ist durch die Zählung der kurzzeitigen Steigerungen der von der elektrischen Maschine erzeugten elektrischen Energie als eine Art Inkrementezählung möglich, da die Anzahl der Steigerungen der erzeugten elektrischen Energie mit einer Anzahl von Umdrehungen des Rotors der elektrischen Maschine und dadurch mit der Bewegung des Bauteils, welches mit der elektrischen Maschine über eine Rotorachse gekoppelt ist, korrespondiert. Ein zusätzlicher Inkrementalgeber ist dann nicht erforderlich, wodurch auch keine zusätzliche elektrische Energie zu dessen Betrieb erforderlich ist. Daher ist die auf diese Weise erzeugte elektrische Energie zur Positionsermittlung und zur Speicherung der ermittelten Position ausreichend.

Es kann jedoch alternativ oder zusätzlich auch ein Inkrementalgeber, zum Beispiel ein optischer Inkrementalgeber, verwendet werden, welcher beispielsweise in einem Normalbetrieb bei einer regulären elektrischen Energieversorgung zur Positionsermittlung eingesetzt wird, d.h. im Falle der Kabinentür der Aufzugkabine bei intakter regulärer elektrischer Energieversorgung durch ein Energieversorgungsnetz. Ein derartiger Inkrementalgeber kann dann bei Ausfall der regulären elektrischen Energieversorgung und dem manuellen Bewegen des Bauteils auch durch die elektrische Energieversorgung der elektrischen Maschine im Generatorbetrieb mit ausreichend elektrischer Energie versorgt werden und dadurch weiterhin zur Positionsermittlung eingesetzt werden.

Zweckmäßigerweise wird die ermittelte Position in einer Speichereinheit gespeichert. Diese wird zur Speicherung mittels der durch die elektrische Maschine im Generatorbetrieb erzeugten elektrischen Energie betrieben, sollte jedoch vorteilhafterweise auch ohne eine elektrische Energieversorgung speichererhaltend sein. Beispielsweise ist die Speichereinheit als ein so genannter EEPROM, insbesondere als ein so genannter Flash-EEPROM oder als eine Festplatte ausgebildet.

Ausführungsbeispiele der Erfindung werden im Folgenden anhand von Zeichnungen näher erläutert.

Dabei zeigen:
- FIG 1: eine schematische Darstellung einer Aufzugkabine und einer mit einer elektrischen Maschine gekoppelten Kabinentür,
- FIG 2: eine schematische Darstellung einer elektrischen Maschine, und
- FIG 3: eine schematische Darstellung eines auf einen Rotor einer elektrischen Maschine wirkenden zusätzlichen Drehmomentes.

Einander entsprechende Teile sind in allen Figuren mit den gleichen Bezugszeichen versehen.

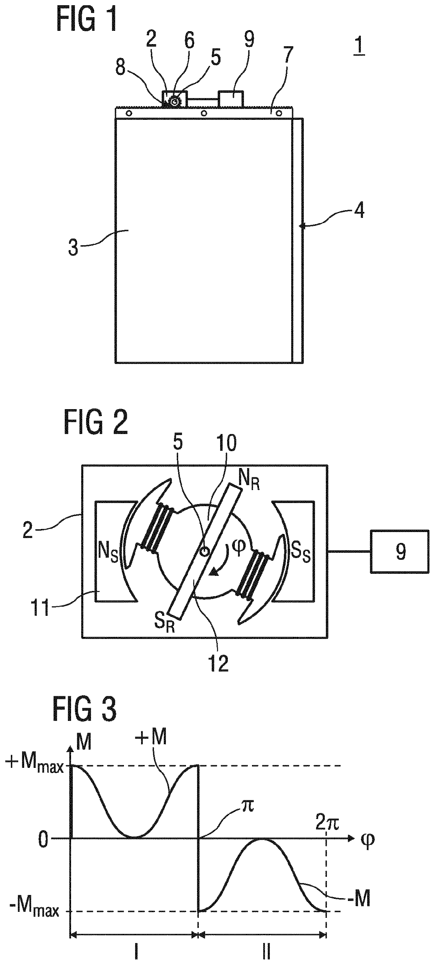

Figur 1 zeigt am Beispiel eines Aufzugs eine Vorrichtung 1 zur Positionsermittlung eines mit einer elektrischen Maschine 2 gekoppelten beweglichen Bauteils 3, mittels welcher ein Verfahren zur Positionsermittlung des mit der elektrischen Maschine 2 gekoppelten beweglichen Bauteils 3 durchführbar ist. Das mit der elektrischen Maschine 2 gekoppelte bewegliche Bauteil 3 ist im hier dargestellten Ausführungsbeispiel eine Tür des Aufzugs, genauer gesagt eine Kabinentür einer Aufzugkabine 4. Die Aufzugkabine 4 ist in einem hier nicht dargestellten Aufzugschacht angeordnet, in welchem sie sich zwischen Etagen eines nicht dargestellten Gebäudes bewegt.

Die elektrische Maschine 2 dient bei einer regulären elektrischen Energieversorgung über ein Energieversorgungsnetz als ein Antriebsmotor zum Bewegen des Bauteils 3, im hier dargestellten Beispiel zum Öffnen und Schließen der Kabinentür. Zu diesem Zweck ist die elektrische Maschine 2 über ein Getriebe, beispielsweise über ein auf einer Rotorachse 5 der elektrischen Maschine 2 angeordnetes Zahnrad 6 und eine mit dem als Kabinentür ausgebildeten Bauteil 3 verbundene Zahnstange 7 mit dem als Kabinentür ausgebildeten Bauteil 3 gekoppelt. In anderen Ausführungsbeispielen kann eine derartige Kopplung 8 der elektrischen Maschine 2 mit dem beweglichen Bauteil 3 beispielsweise auch über einen Zahnriemen erfolgen.

Mittels einer Positionsermittlungsanordnung ist eine jeweilige Position des als Kabinentür ausgebildeten beweglichen Bauteils 3 feststellbar, so dass sichergestellt ist, dass die Aufzugkabine 4 erst bewegt wird, wenn die Kabinentür geschlossen ist. Zu diesem Zweck ist beispielsweise an der elektrischen Maschine 2, im Bereich der Kopplung 8 oder an der Kabinentür ein nicht näher dargestellter Inkrementalgeber angeordnet, zum Beispiel ein optischer Inkrementalgeber.

Bei einem Ausfall der regulären elektrischen Energieversorgung ist ein manuelles Bewegen des Bauteils 3 möglich, d.h. ein manuelles Öffnen oder Schließen der Kabinentür beispielsweise durch einen Monteur, um in der Aufzugkabine 4 befindliche Personen zu befreien. Aufgrund des Ausfalls der regulären elektrischen Energieversorgung funktionieren in diesem Fall jedoch herkömmliche Inkrementalgeber zur Positionsbestimmung nicht mehr, so dass eine Positionsveränderung durch das manuelle Bewegen des als Kabinentür ausgebildeten Bauteils 3 nicht erfassbar ist.

Bei Aufzügen nach dem Stand der Technik ist daher bei wieder hergestellter regulärer elektrischer Energieversorgung eine sehr zeitaufwändige Initialisierungsbewegung der Kabinentür erforderlich, beispielsweise ein vollständiges Öffnen und/ oder Schließen der Kabinentür mit einer sehr langsamen Bewegungsgeschwindigkeit, um eine vollständig geöffnete und vollständig geschlossene Position der Kabinentür erneut zu ermitteln und auf diese Weise mittels des Inkrementalgebers wieder die Positionsbestimmung der Kabinentür zu ermöglichen.

Es ist daher besonders vorteilhaft, auch bei einem Ausfall der regulären elektrischen Energieversorgung und einem manuellen Bewegen des als Kabinentür ausgebildeten Bauteils 3 jederzeit eine Positionsbestimmung zu ermöglichen und die zuletzt ermittelte Position in einer Speichereinheit 9 abzuspeichern. Auf diese Weise ist bei wiederhergestellter regulärer elektrischer Energieversorgung die Kabinentür sofort wieder mit Normalgeschwindigkeit zu schließen und auch wieder zu öffnen, so dass die vorherige Initialisierungsbewegung der Kabinentür nicht mehr erforderlich ist. Auf diese Weise ist eine erhebliche Zeitersparnis erreicht, da der Aufzug bei wiederhergestellter regulärer elektrischer Energieversorgung wesentlich schneller wieder einsatzbereit ist.

Diese Positionsermittlung wird durch die Vorrichtung 1 und das Verfahren zur Positionsermittlung ermöglicht. Dabei wird die elektrische Maschine 2 bei einem manuellen Bewegen des als Kabinentür ausgebildeten Bauteils 3 als ein Generator zur Erzeugung von elektrischer Energie für die Positionsermittlungsanordnung eingesetzt.

Dazu ist es erforderlich, dass die Kopplung 8 der elektrischen Maschine 2 mit dem Bauteil 3 derart ausgebildet ist, dass eine magnetische Anziehungsreaktion und/oder Abstoßungsreaktion zwischen magnetischen und/oder magnetisierten Teilen eines in Figur 2 näher dargestellten Rotors 10 und Stators 11 der elektrischen Maschine 2 zu einer durch die Kopplung 8 ungehinderten kurzzeitigen Beschleunigung des Rotors 10 und einer daraus resultierenden kurzzeitigen Steigerung der erzeugten elektrischen Energie führt. D.h. die Kopplung 8 der elektrischen Maschine 2 mit dem als Kabinentür ausgebildeten beweglichen Bauteil 3 muss ausreichend lose ausgebildet sein und/oder eine ausreichende Elastizität aufweisen, um einen ausreichenden Freilauf für den Rotor 10 zu ermöglichen.

Um diese kurzzeitige Beschleunigung des Rotors 10 zu ermöglichen, ist in diesem Ausführungsbeispiel, wie in Figur 2 dargestellt, am Rotor 10 zumindest ein Permanentmagnet 12 senkrecht zur Rotorachse 5 angeordnet, welcher einen magnetischen Rotornordpol N_{R} und einen magnetischen Rotorsüdpol S_{R} aufweist. Der Stator 11 ist als ein Permanentmagnetstator ausgebildet und weist einen magnetischen Statornordpol N_{S} und einen magnetischen Statorsüdpol S_{S} auf. Auf diese Weise ergibt sich bei einem manuellen Bewegen des als Kabinentür ausgebildeten Bauteils 3 ein in Figur 3 beispielhaft schematisch dargestellter Verlauf eines durch die magnetische Anziehungsreaktion und/oder Abstoßungsreaktion auf den Stator 11 wirkenden zusätzlichen Drehmomentes M in Abhängigkeit von einem Drehwinkel φ des Rotors 10.

Es sind in weiteren Ausführungsformen natürlich auch eine Mehrzahl derartiger am Rotor 10 angeordneter Permanentmagnete 12 möglich, welche zueinander verdreht ausgerichtet sind. Des Weiteren sind auch andere elektrische Maschinen 2 möglich, welche einen als Permanentmagnetrotor ausgebildeten Rotor 10 und am Stator 11 angeordnete zusätzliche Permanentmagnete 12 aufweisen. Des Weiteren ist das Verfahren auch ohne Permanentmagnete 12 durchführbar, da auch bereits eine magnetische Remanenz von Kernen eines Elektromagnetstators und/ oder eines Elektromagnetrotors ausreichend sein kann.

Ohne diese magnetische Anziehungsreaktion und/oder Abstoßungsreaktion zwischen den magnetischen und/oder magnetisierten Teilen des Rotors 10 und des Stators 11 der elektrischen Maschine 2, d.h. zwischen den magnetischen Polen N_{R}, S_{R}, N_{S}, S_{S} des am Rotor 10 angeordneten Permanentmagneten 12 und des Stators 11, würde aufgrund einer konstant auf das Bauteil 3 einwirkenden Kraft, welche zum manuellen Bewegen des Bauteils 3 führt und welche über das Bauteil 3 und die Kopplung 8 mit der elektrischen Maschine 2 auch auf die Rotorachse 5 der elektrischen Maschine 2 und über diese auf den Rotor 10 wirkt, auf den Rotor 10 ein hier nicht dargestelltes konstantes Drehmoment einwirken. Dabei besteht jedoch die Gefahr, dass die äußere Kraft zu gering ist und die Bewegung des Bauteils 3 zu gering ist, um eine ausreichend schnelle Umdrehung des Rotors 10 zu bewirken, so dass keine ausreichende elektrische Energie zum Betrieb der Positionsermittlungsanordnung erzeugbar ist.

Aufgrund der magnetischen Anziehungsreaktion und/oder Abstoßungsreaktion zwischen den magnetischen Polen N_{R}, S_{R}, N_{S}, S_{S} des am Rotor 10 angeordneten Permanentmagneten 12 und des Stators 11 der elektrischen Maschine 2 und des dadurch jeweils kurzzeitig erzeugten zusätzlichen Drehmoments M wird der Rotor 10 jedoch kurzzeitig ausreichend stark beschleunigt, so dass die daraus resultierende Steigerung der erzeugten elektrischen Energie für die Positionsermittlungsanordnung ausreicht.

Beispielsweise befinden sich zunächst bei einem Drehwinkel des Rotors 10 von Null gleiche magnetische Pole N_{S}, S_{S}, N_{R}, S_{R} des Stators 11 und des am Rotor 10 angeordneten Permanentmagneten 12, d.h. die magnetischen Nordpole N_{S}, N_{R} und die magnetischen Südpole S_{S}, S_{R} des Stators 11 und des am Rotor 10 angeordneten Permanentmagneten 12 in einer geringstmöglichen Entfernung zueinander. In dieser Position ist das durch die magnetische Anziehungsreaktion und/oder Abstoßungsreaktion erzeugte zusätzliche Drehmoment M gleich Null.

Wird dann der Rotor 10 durch die auf das Bauteil 3 einwirkende äußere Kraft und die daraus resultierende Bewegung des Bauteils 3 beispielsweise im Uhrzeigersinn gedreht, so steigt das zusätzliche Drehmoment M aufgrund der magnetischen Abstoßungsreaktion gleicher magnetischer Pole N_{S}, S_{S}, N_{R}, S_{R} des Stators 11 und des am Rotor 10 angeordneten Permanentmagneten 12 sofort auf einen positiven Maximalwert +Mₘₐₓ an, fällt bei einer weiteren Drehung des Rotors 10 aufgrund einer zunehmenden Entfernung gleicher magnetischer Pole N_{S}, S_{S}, N_{R}, S_{R} des Stators 11 und des am Rotor 10 angeordneten Permanentmagneten 12 bis zu einem Drehwinkel φ von π/2 oder 90° gegen Null ab und steigt dann aufgrund einer Annäherung gegensätzlicher magnetischer Pole N_{S}, S_{S}, N_{R}, S_{R} des Stators 11 und des am Rotor 10 angeordneten Permanentmagneten 12, welche sich gegenseitig anziehen, bis zu einem Drehwinkel φ von n oder 180° wieder auf den positiven Maximalwert +Mₘₐₓ an.

Es ist dabei abhängig von Magnetfeldstärken des Stators 11 und des am Rotor 10 angeordneten Permanentmagneten 12 und von einem Abstand der Pole N_{S},S_{S} des Stators 11 zu den Polen N_{R}, S_{R} des am Rotor 10 angeordneten Permanentmagneten 12, ob das zusätzliche Drehmoment M bei einem Drehwinkel φ von π/2 oder 90° auf nahe Null abfällt, wie in Figur 3 beispielhaft schematisch dargestellt, oder ob es weniger stark abfällt, bevor es in Richtung des Drehwinkels φ von π oder 180° wieder ansteigt. Im Drehwinkelbereich zwischen Null und π, d.h. zwischen Null und 180°, wirkt das zusätzliche Drehmoment M als ein positives zusätzliches Drehmoment +M mit der äußeren Kraft mitkoppelnd im Uhrzeigersinn und dadurch in die von der äußeren Kraft verursachten Drehrichtung auf den Rotor 10, wie in Figur 3 in einem ersten Bereich I des Diagramms schematisch dargestellt.

Aufgrund der Lose und Elastizität in der Kopplung 8 zwischen dem Bauteil 3 und der elektrischen Maschine 2 und dem daraus resultierenden Freilauf des Rotors 10 wird durch dieses als positives zusätzliches Drehmoment +M wirkende zusätzliche Drehmoment M der Rotor 10 kurzzeitig beschleunigt. Aus der schnelleren Drehbewegung des Rotors 10 resultiert eine Steigerung der durch die elektrische Maschine 2 erzeugten elektrischen Energie, welche zur elektrischen Energieversorgung der Positionsermittlungsanordnung genutzt wird, um die Position des Bauteils 3 zu bestimmen und in der Speichereinheit 9 zu speichern. Das in diesem ersten Bereich I als mitkoppelndes positives zusätzliches Drehmoment +M ausgebildete zusätzliche Drehmoment M wird solange erzeugt, bis sich gegensätzliche magnetische Pole N_{S}, S_{S}, N_{R}, S_{R} des Stators 11 und des am Rotor 10 angeordneten Permanentmagneten 12 maximal möglich angenähert haben, d.h. bei einem Drehwinkel φ von π oder 180°.

Aufgrund der magnetischen Anziehungskräfte unterschiedlicher magnetischer Pole N_{S}, S_{S}, N_{R}, S_{R} des Stators 11 und des am Rotor 10 angeordneten Permanentmagneten 12 ist der Rotor 10 bestrebt, in dieser Position bei einem Drehwinkel φ von n oder 180° zu verharren, so dass das zusätzliche Drehmoment M sofort auf Null abfällt. Der Rotor 10 wird jedoch durch die auf den Rotor 10 über die Bewegung des Bauteils 3 einwirkende Kraft weiter im Uhrzeigersinn gedreht. Daraus resultiert dann aufgrund der magnetischen Anziehung gegensätzlicher magnetischer Pole N_{S}, S_{S}, N_{R}, S_{R} des Stators 11 und des am Rotor 10 angeordneten Permanentmagneten 12 ein sofortiges negatives Ansteigen des auf den Rotor 10 einwirkenden zusätzlichen Drehmomentes M auf einen negativen Maximalwert -Mₘₐₓ. Das nun als negatives zusätzliches Drehmoment -M ausgebildete zusätzliche Drehmoment M wirkt jetzt entgegen dem Uhrzeigersinn und dadurch der äußeren Kraft entgegen. D.h. es wirkt jetzt in entgegen gesetzter Drehrichtung.

Das negative zusätzliche Drehmoment -M fällt bei einer weiteren Drehung des Rotors 10 aufgrund einer zunehmenden Entfernung gegensätzlicher magnetischer Pole N_{S}, S_{S}, N_{R}, S_{R} des Stators 11 und des am Rotor 10 angeordneten Permanentmagneten 12 bis zu einem Drehwinkel φ von 3π/4 oder 270° gegen Null ab und steigt dann aufgrund einer Annäherung gleicher magnetischer Pole Pole N_{S}, S_{S}, N_{R}, S_{R} des Stators 11 und des am Rotor 10 angeordneten Permanentmagneten 12, welche sich gegenseitig abstoßen, bis zu einem Drehwinkel φ von 2π oder 360° wieder negativ auf den negativen Maximalwert -Mₘₐₓ an. Es ist dabei auch hier abhängig von Magnetfeldstärken des Stators 11 und des am Rotor 10 angeordneten Permanentmagneten 12 und vom Abstand der Pole N_{S},S_{S} des Stators 11 zu den Polen N_{R}, S_{R} des am Rotor 10 angeordneten Permanentmagneten 12, ob das als negatives zusätzliches Drehmoment -M ausgebildete zusätzliche Drehmoment M bei einem Drehwinkel φ von 3π/4 oder 270° auf nahe Null negativ abfällt, wie in Figur 3 beispielhaft schematisch dargestellt, oder ob es weniger stark negativ abfällt, bevor es in Richtung des Drehwinkels φ von 2π oder 360° wieder negativ ansteigt. Im Drehwinkelbereich zwischen π und 2π, d.h. zwischen 180° und 360°, wirkt das zusätzliche Drehmoment M als negatives zusätzliches Drehmoment -M gegenkoppelnd, d.h. entgegen der äußeren Kraft und entgegen dem Uhrzeigersinn und dadurch entgegen der von der äußeren Kraft verursachten Drehrichtung auf den Rotor 10, wie in Figur 3 in einem zweiten Bereich II des Diagramms schematisch dargestellt.

Der Rotor 10 ist nun durch das als negatives zusätzliches Drehmoment -M ausgebildete zusätzliche Drehmoment M bestrebt, sich entgegen dem Uhrzeigersinn zu drehen. Ist das nun entgegen der äußeren Kraft wirkende zusätzliche Drehmoment M groß genug und ist die Lose und Elastizität in der Kopplung 8 groß genug, so resultiert daraus eine kurzzeitige Beschleunigung des Rotors 10 entgegen dem Uhrzeigersinn, d.h. in eine Drehrichtung, welche der durch die manuelle Bewegung des Bauteils 3 hervorgerufenen Drehrichtung entgegen gesetzt ist, so dass auch diese kurzzeitige Beschleunigung des Rotors 10 zur Steigerung der elektrischen Energieerzeugung genutzt werden kann.

Durch eine Zählung der periodischen Steigerungen der erzeugten elektrischen Energie, welche mit Umdrehungszahlen des über die Rotorachse 5 mit dem Bauteil 3 gekoppelten Rotors 10 und daher auch mit der Bewegung des Bauteils 3 korrespondieren, kann auch die Positionsermittlung des Bauteils 3 durchgeführt werden. Dabei ist aufgrund einer wechselnden Polarität der Steigerungen der erzeugten elektrischen Energie eine gute Zählung möglich. Ein zusätzlicher Inkrementalgeber ist dann nicht erforderlich, wodurch auch keine zusätzliche elektrische Energie zu dessen Betrieb erforderlich ist. Daher ist die auf diese Weise erzeugte elektrische Energie zur Positionsermittlung und zur Speicherung der ermittelten Position ausreichend.

Die ermittelte Position wird in der Speichereinheit 9 gespeichert, wobei die Speichereinheit 9 vorzugsweise auch ohne eine elektrische Energieversorgung speichererhaltend ist. Beispielsweise ist die Speichereinheit 9 als ein so genannter EEPROM, insbesondere als ein so genannter Flash-EEPROM oder als eine Festplatte ausgebildet. Auf diese Weise wird die zuletzt ermittelte Position des beweglichen Bauteils 3 auch dann gespeichert, wenn das Bauteil 3 nicht mehr manuell bewegt wird und daher keine elektrische Energie erzeugt wird und wenn die reguläre elektrische Energieversorgung noch nicht wieder hergestellt ist.

Durch die Positionsermittlung über die Zählung der Steigerungen der erzeugten elektrischen Energie als eine Art Inkrementezählung ist eine Kostenersparnis und Bauraumreduzierung erreichbar, da kein zusätzlicher Inkrementalgeber erforderlich ist. Zudem ist die Positionsermittlung, da sie nicht mechanisch erfolgt, weitgehend verschleißfrei.

## Patentansprüche

1. Vorrichtung (1) zur Positionsermittlung eines mit einer elektrischen Maschine (2) gekoppelten beweglichen Bauteils (3), wobei die elektrische Maschine (2) bei einer ausreichenden elektrischen Energieversorgung als ein Antriebsmotor zum Bewegen des Bauteils (3) dient und bei einem manuellen Bewegen des Bauteils (3) als ein Generator zur Erzeugung von elektrischer Energie für eine Positionsermittlungsanordnung dient,
**dadurch gekennzeichnet, dass** die elektrische Maschine (2) und ihre Kopplung (8) mit dem Bauteil (3) derart ausgebildet sind, dass eine magnetische Anziehungsreaktion und/oder Abstoßungsreaktion zwischen magnetischen und/oder magnetisierten Teilen eines über eine Rotorachse (5) mit dem Bauteil (3) gekoppelten Rotors (10) und eines Stators (11) der elektrischen Maschine (2) zu einer durch die Kopplung (8) ungehinderten kurzzeitigen Beschleunigung des Rotors (10) und einer daraus resultierenden kurzzeitigen Steigerung der erzeugten elektrischen Energie führt, so dass durch eine Zählung der periodischen Steigerungen der erzeugten elektrischen Energie, welche mit Umdrehungszahlen des Rotors (10) und daher mit der Bewegung des Bauteils (3) korrespondieren, die Positionsermittlung des Bauteils (3) durchgeführt werden kann.

2. Vorrichtung (1) nach Anspruch 1,
**dadurch gekennzeichnet, dass** der Stator (11) und/oder der Rotor (10) zumindest einen Permanentmagnet (12) aufweist.

3. Vorrichtung (1) nach Anspruch 2,
**dadurch gekennzeichnet, dass** der Stator (11) als ein Permanentmagnetstator ausgebildet ist und am Rotor (10) zumindest ein Permanentmagnet (12) senkrecht zu der Rotorachse (5) angeordnet ist.

4. Vorrichtung (1) nach Anspruch 2,
**dadurch gekennzeichnet, dass** der Rotor (10) als ein Permanentmagnetrotor ausgebildet ist und am Stator (11) zumindest ein Permanentmagnet (12) angeordnet ist.

5. Vorrichtung (1) nach einem der Ansprüche 1 bis 4, umfassend zumindest eine Speichereinheit (9) zur Speicherung der ermittelten Position des Bauteils (3).

6. Vorrichtung (1) nach einem der Ansprüche 1 bis 5, **dadurch gekennzeichnet, dass** die Positionsermittlungsanordnung einen Inkrementalgeber umfasst.

7. Verfahren zur Positionsermittlung eines mit einer elektrischen Maschine (2) gekoppelten beweglichen Bauteils (3) unter Verwendung einer Vorrichtung (1) nach einem der Ansprüche 1 bis 6, wobei bei einem manuellen Bewegen des Bauteils (3) mittels der als Generator arbeitenden elektrischen Maschine (2) elektrische Energie für eine Positionsermittlungsanordnung erzeugt wird und mittels der Positionsermittlungsanordnung eine Position des Bauteils (3) ermittelt wird, **dadurch gekennzeichnet, dass** der Rotor (10) der elektrischen Maschine (2) durch eine magnetische Anziehungsreaktion und/oder Abstoßungsreaktion zwischen magnetischen und/oder magnetisierten Teilen des Rotors (10) und eines Stators (11) der elektrischen Maschine (2) von der Kopplung (8) ungehindert kurzzeitig beschleunigt wird und dadurch die Erzeugung der elektrischen Energie kurzzeitig gesteigert wird,
und dass die Position des Bauteils (3) durch eine Ermittlung einer Anzahl der kurzzeitigen Steigerungen der erzeugten elektrischen Energie ermittelt wird.

8. Verfahren nach Anspruch 7,
**dadurch gekennzeichnet, dass** die ermittelte Position in einer Speichereinheit (9) gespeichert wird.

## Claims

1. Apparatus (1) for ascertaining the position of a moveable component (3) coupled to an electrical machine (2), wherein with an adequate electrical power supply, the electrical machine (2) is used as a drive motor for moving the component (3) and with a manual movement of the component (3) the electrical machine (2) is used as a generator for generating electrical energy for a position ascertainment arrangement, **characterised in that**
the electrical machine (2) and its coupling (8) with the component (3) are embodied such that a magnetic attraction reaction and/or repelling reaction between magnetic and/or magnetised parts of a rotor (10) and a stator (11) of the electrical machine (2) coupled to the component (3) via a rotor axle (5) result in a short-term acceleration of the rotor (10) which is unhindered by the coupling (8) and a short-term increase in the generated electrical energy resulting therefrom, so that by counting the periodic increases in the generated electrical energy, which correspond to number of revolutions of the rotor (10) and thus to the movement of the component (3), the position ascertainment of the component (3) can be implemented.

2. Apparatus (1) according to claim 1,
**characterised in that** the stator (11) and/or the rotor (10) comprises at least one permanent magnet (12).

3. Apparatus (1) according to claim 2,
**characterised in that** the stator (11) is embodied as a permanent magnet stator and at least one permanent magnet (12) is arranged on the rotor (10) at right angles to a rotor axle (5).

4. Apparatus (1) according to claim 2,
**characterised in that** the rotor (10) is embodied as a permanent magnet rotor and at least one permanent magnet (12) is arranged on the stator (11).

5. Apparatus (1) according to one of claims 1 to 4, including at least one storage unit (9) for storing the ascertained position of the component (3).

6. Apparatus (1) according to one of claims 1 to 5,
**characterised in that** the position ascertainment arrangement includes an incremental sensor.

7. Method for ascertaining the position of a moveable component (3) coupled to an electrical machine (2) using an apparatus (1) according to one of claims 1 to 6, wherein, with a manual movement of the component (3) by means of the electrical machine (2) operating as a generator, electrical energy is generated for a position ascertainment arrangement and a position of the component (3) is ascertained by means of the position ascertainment arrangement, **characterised in that** the rotor (10) of the electrical machine (2) is accelerated in the short-term by a magnetic attraction reaction and/or repelling reaction between magnetic and/or magnetised parts of the rotor (10) and a stator (11) of the electrical machine (2), unhindered by the coupling (8), and the generation of electrical energy is as a result increased in the short-term, and that the position of the component (3) is ascertained by ascertaining a number of short-term increases in the electrical energy generated.

8. Method according to claim 7,
**characterised in that** the ascertained position is stored in a storage unit (9).

## Revendications

1. Dispositif ( 1 ) de détermination de la position d'une pièce ( 3 ) mobile et couplée à une machine ( 2 ) électrique, la machine ( 2 ) électrique servant, si l'alimentation en énergie électrique est suffisante, de moteur d'entraînement pour le déplacement de la pièce ( 3 ) et, lors d'un déplacement manuel de la pièce ( 3 ), de génératrice de production d'énergie électrique pour un dispositif de détermination de position,
**caractérisé en ce que** la machine ( 2 ) électrique et son accouplement ( 8 ) à la pièce ( 3 ) sont constitués de manière à ce qu'une réaction d'attraction magnétique et/ou une réaction de répulsion magnétique, entre des parties magnétiques et/ou magnétisées d'un rotor ( 10 ) accouplé à la pièce ( 3 ) par un axe ( 5 ) de rotor et d'un stator ( 11 ) de la machine ( 2 ) électrique, donne une accélération de courte durée du rotor ( 10 ) non entravée par l'accouplement ( 8 ) et une augmentation de courte durée en résultant de l'énergie électrique produite, de manière à pouvoir effectuer la détermination de position de la pièce ( 3 ) en comptant les augmentations périodiques de l'énergie électrique produite, qui correspondent à des nombres de tours du rotor ( 10 ) et donc au déplacement de la pièce ( 3 ).

2. Dispositif ( 1 ) suivant la revendication 1,
**caractérisé en ce que** le stator ( 11 ) et/ou le rotor ( 10 ) a, au moins, un aimant ( 12 ) permanent.

3. Dispositif ( 1 ) suivant la revendication 2,
**caractérisé en ce que** le stator ( 11 ) est constitué en stator à aimant permanent et au moins un aimant ( 12 ) permanent est monté sur rotor ( 10 ) perpendiculairement à l'axe ( 5 ) de rotor.

4. Dispositif ( 1 ) suivant la revendication 2,
**caractérisé en ce que** le rotor ( 10 ) est constitué sous la forme d'un rotor à aimant permanent et au moins un aimant ( 12 ) permanent est monté sur le stator ( 11 ).

5. Dispositif ( 1 ) suivant l'une des revendications 1 à 4, comprenant au moins une unité ( 9 ) de mémorisation pour mémoriser la position déterminée de la pièce ( 3 ).

6. Dispositif ( 1 ) suivant l'une des revendications 1 à 5,
**caractérisé en ce que** le dispositif de détermination de position comprend un capteur incrémentiel.

7. Procédé de détermination de la position d'une pièce ( 3 ) mobile accouplée à une machine ( 2 ) électrique, en utilisant le dispositif ( 1 ) suivant l'une des revendications 1 à 6, dans lequel, lors d'un déplacement manuel de la pièce ( 3 ), on produit, au moyen de la machine ( 2 ) électrique fonctionnant en génératrice, de l'énergie électrique pour un dispositif de détermination de position, et on détermine une position de la pièce ( 3 ) au moyen du dispositif de détermination de position, **caractérisé en ce que** l'on accélère pendant une courte durée, sans entrave par l'accouplement ( 8 ), le rotor ( 10 ) de la machine ( 2 ) électrique par une réaction d'attraction magnétique et/ou une réaction de répulsion magnétique entre des parties magnétiques et/ou magnétisées du rotor ( 10 ) et d'un stator ( 11 ) de la machine ( 2 ) électrique, et on augmente ainsi pendant une courte durée, la production de l'énergie électrique,
et **en ce que** l'on détermine la position de la pièce ( 3 ) par une détermination d'un nombre des augmentations de courte durée de l'énergie électrique produite.

8. Procédé suivant la revendication 7,
**caractérisé en ce qu'**on mémorise la position déterminée dans une unité ( 9 ) de mémorisation.
